(19) Europäisches Patentamt / European Patent Office / Office européen des brevets

(11) **EP 2 904 254 B2**

(12) **NEW EUROPEAN PATENT SPECIFICATION**
After opposition procedure

(45) Date of publication and mention
of the opposition decision:
**09.10.2024   Bulletin 2024/41**

(45) Mention of the grant of the patent:
**26.08.2020   Bulletin 2020/35**

(21) Application number: **13843958.3**

(22) Date of filing: **12.03.2013**

(51) International Patent Classification (IPC):
**F02K 3/06** (2006.01)        **F02K 3/00** (2006.01)
**F01D 9/02** (2006.01)

(52) Cooperative Patent Classification (CPC):
**F02K 3/06;** F01D 5/34; F05D 2220/327;
F05D 2220/36; F05D 2260/40311; Y02T 50/60

(86) International application number:
**PCT/US2013/030407**

(87) International publication number:
**WO 2014/055114 (10.04.2014 Gazette 2014/15)**

(54) **GEARED TURBOFAN ENGINE WITH HIGH COMPRESSOR EXIT TEMPERATURE**

GETRIEBEFAN MIT HOHER VERDICHTERAUSGANGSTEMPERATUR

TURBORÉACTEUR DOUBLE-FLUX À ENGRENAGES PRÉSENTANT UNE TEMPÉRATURE DE
SORTIE DE COMPRESSEUR ÉLEVÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **02.10.2012   US 201261708692 P**

(43) Date of publication of application:
**12.08.2015   Bulletin 2015/33**

(60) Divisional application:
**20192702.7 / 3 770 415**

(73) Proprietor: **RTX Corporation
Farmington, CT 06032 (US)**

(72) Inventors:
• **SCHWARZ, Frederick M.
Glastonbury, Connecticut 06033 (US)**

• **HASEL, Karl L.
Manchester, Connecticut 06040 (US)**

(74) Representative: **Dehns
St. Bride's House
10 Salisbury Square
London EC4Y 8JD (GB)**

(56) References cited:
**US-A- 4 055 946        US-A- 4 446 696
US-A- 5 201 845        US-A1- 2005 111 964
US-A1- 2006 236 675        US-A1- 2009 053 058
US-A1- 2009 148 276        US-A1- 2012 073 263
US-A1- 2012 237 335        US-B1- 6 267 553
US-B1- 6 375 421**

EP 2 904 254 B2

## Description

## BACKGROUND

A gas turbine engine typically includes a fan section, a compressor section, a combustor section and a turbine section. Air entering the compressor section is compressed and delivered into the combustion section where it is mixed with fuel and ignited to generate a high-speed exhaust gas flow. The high-speed exhaust gas flow expands through the turbine section to drive the compressor and the fan section. The compressor section typically includes low and high pressure compressors, and the turbine section includes low and high pressure turbines.

The high pressure turbine drives the high pressure compressor through an outer shaft to form a high spool, and the low pressure turbine drives the low pressure compressor through an inner shaft to form a low spool. The fan section may also be driven by the low inner shaft.

A speed reduction device such as an epicyclical gear assembly may be utilized to drive the fan section such that the fan section may rotate at a speed different than the turbine section so as to increase the overall propulsive efficiency of the engine. In such engine architectures, a shaft driven by one of the turbine sections provides an input to the epicyclical gear assembly that drives the fan section at a reduced speed such that both the turbine section and the fan section can rotate at closer to optimal speeds.

Under certain operational conditions, the compressor section of geared turbofan engines can be subjected to high exit temperatures. Although geared turbofan architectures have provided improved propulsive efficiency at high temperatures, turbine engine manufacturers continue to seek further improvements to engine performance including improvements to thermal, transfer and propulsive efficiencies.

US 2009/053058 A1 discloses a turbofan engine, which includes a fan variable area nozzle having a first fan nacelle section and a second fan nacelle section movably mounted relative the first fan nacelle section.

In this specifications the following non-SI units are used, which may be converted to the respective SI or metric unit according to the following conversion:

Fahrenheit (°F) to Kelvin (K): $T(K) = (T(°F) + 459.67°F) \times 5/9$;

Rankin (°R) to Kelvin: $T(K) = T(°R) \times 5/9$

## SUMMARY

The present invention provides a gas turbine engine as defined in claim 1.

In another embodiment according to the previous embodiment, the average exit temperature is between about 1100 °F and about 1450 °F.

In another embodiment according to any of the previous embodiments, the fan drives air along a bypass flow path in a bypass duct defined between a fan nacelle and a core nacelle, and wherein a bypass ratio is greater than about ten.

In another embodiment according to any of the previous embodiments, the geared architecture has a gear ratio that is greater than about 2.4.

In another embodiment according to any of the previous embodiments, the high pressure compressor includes a plurality of stages with each stage comprising a disk with a plurality of blades extending radially outwardly from a rim of the disk, and wherein the plurality of stages includes at least a first stage having a first blade and disk configuration and a second stage having a second blade and disk configuration that is different than the first blade and disk configuration.

In another embodiment according to any of the previous embodiments, the first blade and disk configuration comprises a plurality of slots to receive the plurality of blades and including a plurality of rim cavities for honeycomb seals, and wherein the second blade and disk configuration comprises integrally formed blades such that there are no rim cavities or associated honeycomb seals.

In another embodiment according to any of the previous embodiments, the first stage is positioned forward of the second stage.

In another embodiment, a gas turbine engine includes a fan including a plurality of fan blades rotatable about an axis, a compressor section including at least a first compressor section rotating at a first speed and a second compressor section rotating at a second speed greater than the first speed. A combustor is in fluid communication with the compressor section and a turbine section is in fluid communication with the combustor. A geared architecture is driven by the turbine section for rotating the fan about the axis.

In another embodiment according to any of the previous embodiments, the fan drives air along a bypass flow path in a bypass duct defined between a fan nacelle and a core nacelle, and wherein a bypass ratio is greater than about ten. In another embodiment according to any of the previous embodiments, the geared architecture has a gear ratio that is greater than about 2.4.

In another embodiment according to any of the previous embodiments, the second compressor section includes a plurality of stages with each stage comprising a disk with a plurality of blades extending radially outwardly from a rim of the disk, and wherein the plurality of stages includes at least a first stage having a first blade and disk configuration and a second stage having a second blade and disk configuration that is different than the first blade and disk configuration.

In another embodiment according to any of the previous embodiments, the first blade and disk configuration comprises a plurality of slots to receive the plurality of blades and including a plurality of rim cavities for honeycomb seals, and wherein the second blade and disk configuration comprises integrally formed blades such that there are no rim cavities or associated honeycomb seals.

In another embodiment according to any of the previous embodiments, the first stage is positioned forward of the second stage.

In another embodiment according to any of the previous embodiments, the operating temperature is defined at Sea Level, end of takeoff power and at a rated thrust for the gas turbine engine.

**BRIEF DESCRIPTION OF THE DRAWINGS**

The disclosure can be further understood by reference to the following detailed description when considered in connection with the accompanying drawings wherein:

> Figure 1 schematically illustrates a geared turbofan engine embodiment.
> Figure 2 illustrates a compressor section of the engine of Figure 1.
> Figure 3 is a chart showing operating conditions for three different engines having high compressor exit temperatures that are operable with the subject invention.
> Figure 4 illustrates a blisk with a rim cavity configuration.
> Figure 5 illustrates a blisk without rim cavities.
> Figure 6 is a schematic representation of a compressor section with an inducer.

**DESCRIPTION**

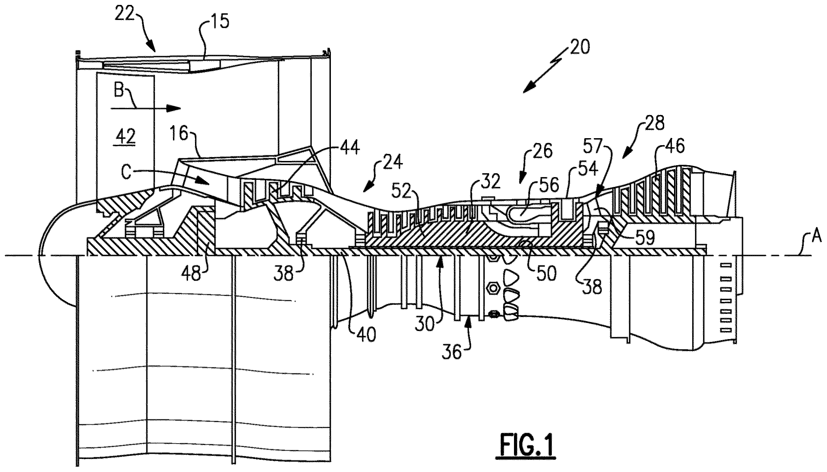

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined between a fan nacelle 15 and a core nacelle 16, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. A mid-turbine frame 58 of the engine static structure 36 is arranged generally between the high pressure turbine 54 and the low pressure turbine 46. The mid-turbine frame 58 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 58 includes airfoils 60 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 50 may be varied. For example, gear system 50 may be located aft of combustor section 26 or even aft of turbine section 28, and fan section 22 may be positioned forward or aft of the location of geared architecture 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet. The flight condition of 0.8 Mach and 35,000 ft, with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of $[(Tram \ °R) / (518.7 \ °R)]^{0.5}$. The "Low corrected fan tip speed" as disclosed herein according to one non-limiting embodiment is less than about 1150 ft / second.

The example gas turbine engine includes the fan 42 that comprises in one non-limiting embodiment less than about 26 fan blades. In another non-limiting embodiment, the fan section 22 includes less than about 20 fan blades. Moreover, in one disclosed embodiment the low pressure turbine 46 includes no more than about 6 turbine rotors schematically indicated at 34. In another non-limiting example embodiment the low pressure turbine 46 includes about 3 turbine rotors. A ratio between the number of fan blades and the number of low pressure turbine rotors is between about 3.3 and about 8.6. The example low pressure turbine 46 provides the driving power to rotate the fan section 22 and therefore the relationship between the number of turbine rotors 34 in the low pressure turbine 46 and the number of blades in the fan section 22 disclose an example gas turbine engine 20 with increased power transfer efficiency.

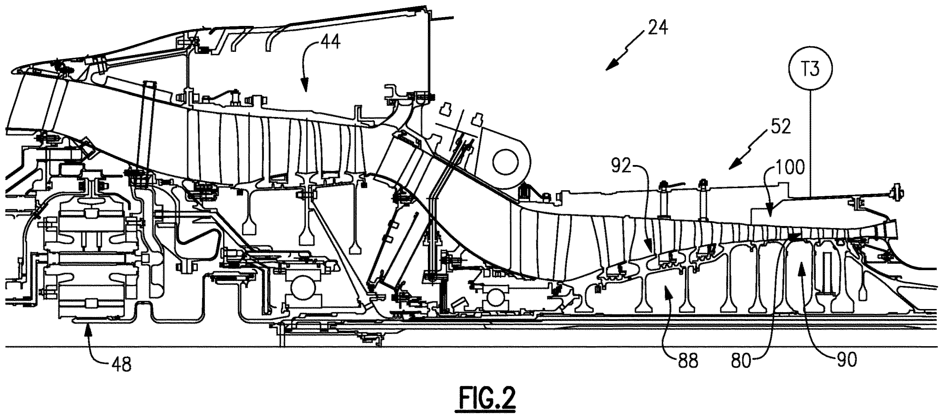

Referring to Figure 2 with continued reference to Figure 1, the disclosed geared turbofan engine 20 includes a compressor section 24 that has rotors and at least two sections rotating at two different speeds. In the disclosed example, one of the compressor sections is the high pressure compressor 52 and one is a low pressure compressor 44. The example high pressure compressor 52 operates at an average exit temperature referred to in this disclosure as T3. The example high pressure compressor 52 operates at a very high T3. In this example the T3 is determined at Sea Level, end of takeoff power and at the rated thrust for the engine for the conditions. In one disclosed embodiment, at takeoff power, the T3 temperature exceeds about 1560 °R (Rankin), which is approximate 1100°F. In one disclosed example, the T3 temperature is between about 1000 °F and about 1500 °F. In other disclosed embodiment, the T3 temperature is above about 1100 °F and up to about 1450 °F.

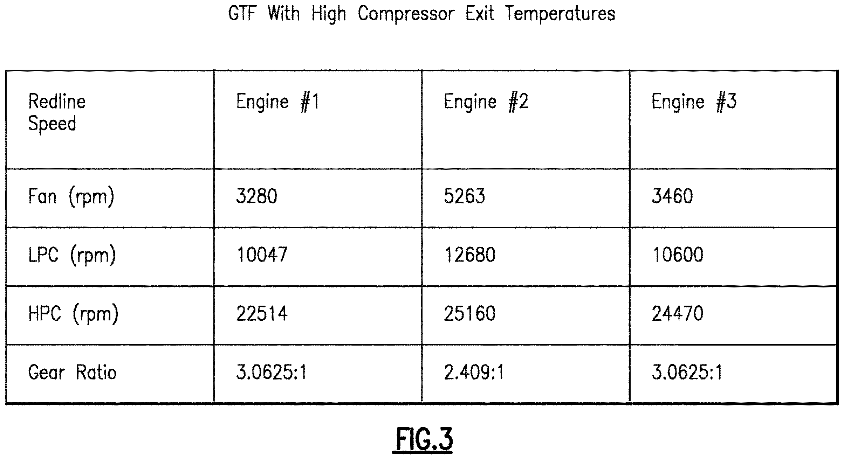

The configuration of the example disclosed geared turbofan engine includes a bypass ratio of greater than about 10 and a gear ratio between the fan and the fandrive turbine that is greater than about 2.4. In this example the fan drive turbine is the low pressure turbine 46; however other fan drive turbine configurations are within the contemplation of this disclosure. Operating conditions for three different engines having ratios greater than 2.4 are shown in Figure 3. The example geared turbofan engine's compressor section 24 is capable of operating efficiently at these conditions.

The example geared turbofan engine's compressor section 24 includes at least two separately rotating sections that rotate at two different rotational speeds and the fan drive turbine 46 drives the fan 42 through the geared architecture 48 at a reduced speed. The fan drive turbine 46 may also drive both the fan 42 and the forward or low pressure compressor 44 through the geared architecture 48 at a reduced speed with the low pressure compressor 44 driven by a hub of the low speed shaft 40.

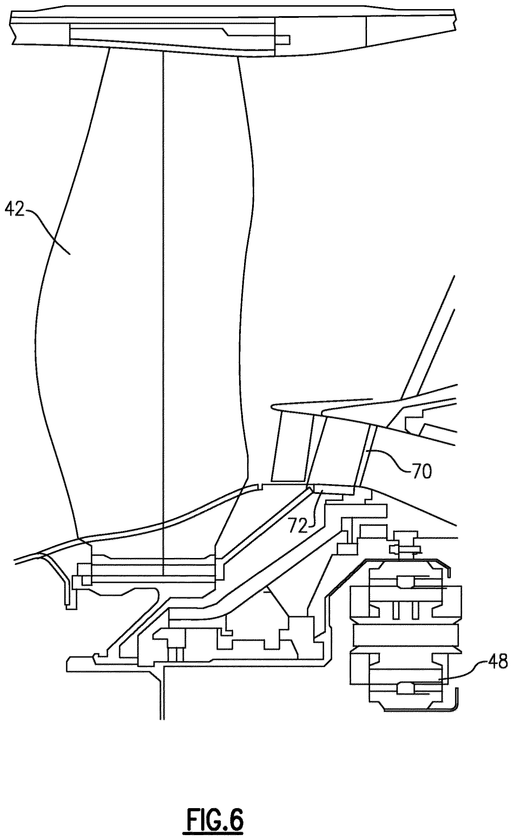

In another disclosed configuration, the geared turbofan engine includes an inducer 70 (shown schematically in Figure 6), which is an additional, third compression section in front of the other two sections of the compressor. In one example, the inducer 70 comprises a blade that can be a slotted blade or a blisk. The inducer 70 is configured to rotate at a different higher speed through an additional output of the fan drive gearbox.

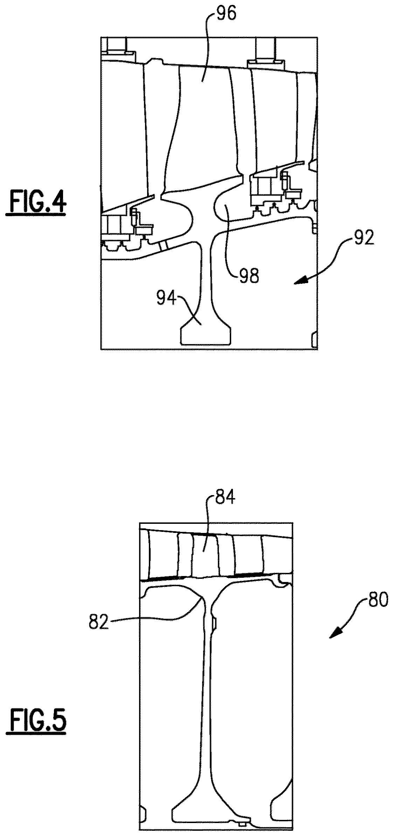

The second or rear compressor of the compressor section (the high pressure compressor 52 in this disclosed example) has bladed disks 80 (also referred to in the industry as integrally bladed rotors or blisks) where a disk 82 and the associated blades 84 are machined out of the same raw material and no dovetails, slots or other fastening features are required to fix the blades 84 to the disk 82 (Figure 5). Further, no honeycomb seals are required in the example high pressure compressor 52 and no rim cavities are present with the bladed disks 80, i.e. the rim is flush with the gaspath.

In blade and disk configurations that have rim cavities, air in the compressor is entrained into the rim cavities and this air is locally pumped up to approximately 50,000 g's in the boundary layer along the disk rim. This pumping or "windage," as is referred to in the art, yields a locally higher air temperature at the rim of the disk downstream of the first stage or cavity and further heating occurs in subsequent stages and cavities such that the next cavity is hotter than the proceeding cavity, and the next, and the next. The heating ultimately affects the last disk and stage in the compressor section 24 and limits the temperature at which the compressor can be operated because of a number of factors. Factors that limit the temperature at which the compressor can be operated include thermal mechanical fatigue, low cycle fatigue stemming from the thermal discontinuities between the rim of the disk and the disk bore, and other material and structural considerations.

As such, the subject compressor section 24 uses the bladed disks 80 at stage(s) located at the rear of the high pressure compressor 52 as indicated at 90 in Figure 2. This eliminates local boundary layer pumping at this location.

A further feature of the example compressor section includes a bladed disk and seal configuration 92 that is used in stage(s) located at the front of the high pressure compressor 52 as indicated at 88 in Figure 2. The bladed disk and seal configuration 92, shown in Figure 4, includes a disk 94 with associated blades 96 that includes rim cavities 98 with honeycomb seals. The bladed discs 92 at this location reduce weight of both the disk rim and disk bore by reducing the amount of material turning at high speed in the rim beyond the self-sustaining radius. Further, because no attachment features are required for compressor blades, no intra-stage leakage through the attachment feature occurs.

Labyrinth or honeycomb seals are used with corresponding vanes because the example vanes have a variable angle for managing a variety of engine speeds and flight conditions. Variable vanes provide for adapting compressor operation to current operating conditions and thereby improve compressor efficiency. Moreover in one example the forward, or first compressor (in this example the forward or first compressor is the low pressure compressor 44) also includes bladed disks. Note that if the inducer 70 is utilized, then bladed disks may be utilized in the second compressor and not the forward-most compressor.

The reduction in leakage and the reduction in pumping enable the last stage of the compressor section to operate within desired temperature parameters and therefore be a practical and desirable commercially viable configuration. In this example the desired temperature range for a life typically set at 15,000 takeoff cycles or at least 7000 cycles includes the T3 temperature (HPC average exit temperature) above about 1100 deg F and up to 1450 deg F at operating conditions of Sea Level, end of takeoff power, at the rated thrust for the engine at this condition.

Moreover, the disclosed compressor section includes a configuration that further enables the increased operating temperature ranges over the desired high number of takeoff cycles. The example low pressure compressor 44 and high pressure compressor 52 include an inner flow path wall and an outer flow path wall that define the successive decrease in area (indicated at 100) to compress incoming airflow (see Figure 2). As appreciated the flow path walls are defined by platform sections of each of the stages in the corresponding compressors. The inner flow path wall is sloped progressively toward the outer flow path wall. The outer flow path wall is generally of a uniform diameter and slopes little if at all. The limited slope and curvature of the outer flow path wall provides a configuration that limits leakage due to bending and thermal changes in compressor airfoils. Bending or thermal changes in airfoils with the limited changes to the outer flow path wall result in significantly little leakage and therefore enable improved efficiency and operation at the increased operational levels.

Although an example embodiment has been disclosed, a worker of ordinary skill in this art would recognize that certain modifications would come within the scope of this disclosure. For that reason, the following claims should be studied to determine the scope and content of this disclosure.

**Claims**

1. A gas turbine engine (20) comprising:

   a fan (42) including a plurality of fan blades rotatable about an axis;
   a compressor section (24) including at least a first compressor section (44) and a second compressor section (52), wherein the first compressor section comprises a low pressure compressor (44) and the second compressor section comprises a high pressure compressor (52);
   a combustor (26) in fluid communication with the compressor section (24);
   a turbine section (28) in fluid communication with the combustor (26), wherein the turbine section (28) comprises a low pressure turbine (46) that drives the low pressure compressor (44) via a first shaft (30) and a high pressure turbine (54) that drives the high pressure compressor (52) via a second shaft (32); and
   a geared architecture (48) driven by the turbine section (28) for rotating the fan (42) about the axis, wherein the geared architecture (48) couples the first shaft (30) to the fan (42),
   **characterized in that**:

   the gas turbine engine (20) further comprises an inducer (70) forming an additional compression section positioned in front of the high and low pressure compressors (52, 44); and
   the gas turbine engine is configured to operate at an average exit temperature of the compressor section that is between about 810.9 K (1000 °F) and about 1088 K (1500 °F),
   wherein the inducer (70) is configured to rotate at a higher speed than the fan (42) through an additional output of the geared architecture (48).

2. The gas turbine engine according to claim 1 wherein the average exit temperature is between about 866.5 K (1100 °F) and about 1061 K(1450 °F).

3. The gas turbine engine according to claim 1 or 2 wherein the fan (42) drives air along a bypass flow path (C) in a bypass duct defined between a fan nacelle (15) and a core nacelle (16), and wherein a bypass ratio is greater than about ten.

4. The gas turbine engine according to any preceding claim wherein the geared architecture (48) has a gear ratio that is greater than about 2.4.

5. The gas turbine engine according to any preceding claim wherein the high pressure compressor (52) includes a plurality of stages with each stage comprising a disk (94) with a plurality of blades (96) extending radially outwardly from a rim of the disk, and wherein the plurality of stages includes at least a first stage having a first blade and disk configuration and a second stage having a second blade and disk configuration that is different than the first blade and disk configuration.

6. The gas turbine engine according to claim 5 wherein the first blade and disk configuration comprises a plurality of slots to receive the plurality of blades and including a plurality of rim cavities (98) for honeycomb seals, and wherein the second blade and disk configuration comprises integrally formed blades such that there are no rim cavities or associated honeycomb seals.

7. The gas turbine engine according to claim 6 wherein the first stage is positioned forward of the second stage.

8. The gas turbine engine according to any preceding claim, wherein:
the first compressor section (24) rotates at a first speed and the second compressor section (52) rotating at a second speed greater than the first speed.

9. The gas turbine engine according to claim 8 wherein the second compressor section (52) includes a plurality of stages with each stage comprising a disk (94) with a plurality of blades (96) extending radially outwardly from a rim of the disk, and wherein the plurality of stages includes at least a first stage having a first blade and disk configuration and a second stage having a second blade and disk configuration that is different than the first blade and disk configuration, and wherein the first blade and disk configuration comprises a plurality of slots to receive the plurality of blades and including a plurality of rim cavities (98) for honeycomb seals, and wherein the second blade and disk configuration comprises integrally formed blades such that there are no rim cavities or associated honeycomb seals, and wherein the first stage is positioned forward of the second stage.

10. The gas turbine engine according to any preceding claim wherein the operating temperature is defined at Sea Level, end of takeoff power and at a rated thrust for the gas turbine engine.

11. The gas turbine engine according to any preceding claim, wherein the geared architecture (48) is positioned intermediate the fan (42) and a compressor rotor driven by the low pressure turbine (46).

12. The gas turbine engine according to any preceding claim, wherein the gas turbine engine is configured with a bypass ratio of greater than 10 and a gear ratio between the fan (42) and the low pressure turbine (46) of 3.0625, the fan (42) being configured to operate at a redline speed of 3280 rpm at the average exit temperature, wherein the first compressor section (44) is configured to rotate at a redline speed of 10,047 rpm and the second compressor section (52) is configured to rotate at a redline speed of 22,514 rpm at the average exit temperature.

**Patentansprüche**

1. Gasturbinentriebwerk (20), umfassend:

einen Fan (42), der eine Vielzahl von Fanschaufeln beinhaltet, die um eine Achse drehbar ist; einen Verdichterabschnitt (24), der mindestens einen ersten Verdichterabschnitt (44) und einen zweiten Verdichterabschnitt (52) beinhaltet, wobei der erste Verdichterabschnitt einen Niederdruckverdichter (44) umfasst und der zweite Verdichterabschnitt einen Hochdruckverdichter (52) umfasst; eine Brennkammer (26) in Fluidverbindung mit dem Verdichterabschnitt (24); einen Turbinenabschnitt (28) in Fluidverbindung mit der Brennkammer (26), wobei der Turbinenabschnitt (28) eine Niederdruckturbine (46), die den Niederdruckverdichter (44) über eine erste Welle (30) antreibt, und eine Hochdruckturbine (54), die den Hochdruckverdichter (52) über eine zweite Welle (32) antreibt, umfasst; und eine Getriebearchitektur (48), die durch den Turbinenabschnitt (28) angetrieben wird, um den Fan (42) um die Achse zu drehen, wobei die Getriebearchitektur (48) die erste Welle (30) mit dem Fan (42) koppelt, **dadurch gekennzeichnet, dass**:

das Gasturbinentriebwerk (20) ferner einen Induktor (70) umfasst, der einen zusätzlichen Verdichtungsabschnitt bildet, welcher vor dem Hoch- und dem Niederdruckverdichter (52, 44) positioniert ist; und

das Gasturbinentriebwerk dazu konfiguriert ist, bei einer durchschnittlichen Ausgangstemperatur des Verdichterabschnitts, die zwischen etwa 810,9 K (1000 °F) und etwa 1088 K (1500 °F) liegt, betrieben zu werden, wobei der Induktor (70) dazu konfiguriert ist, sich durch einen zusätzlichen Ausgang der Getriebearchitektur (48) mit einer höheren Geschwindigkeit als der Fan (42) zu drehen.

2. Gasturbinentriebwerk nach Anspruch 1, wobei die durchschnittliche Ausgangstemperatur zwischen etwa 866,5 K (1100 °F) und etwa 1061 K (1450 °F) liegt.

3. Gasturbinentriebwerk nach Anspruch 1 oder 2, wobei der Fan (42) Luft entlang eines Umgehungsströmungspfads (C) in einem Umgehungskanal treibt, der zwischen einer Fangondel (15) und einer Kerngondel (16) definiert ist, und wobei ein Umgehungsverhältnis größer als etwa zehn ist.

4. Gasturbinentriebwerk nach einem der vorhergehenden Ansprüche, wobei die Getriebearchitektur (48) ein Übersetzungsverhältnis aufweist, das größer als etwa 2,4 ist.

5. Gasturbinentriebwerk nach einem der vorhergehenden Ansprüche, wobei der Hochdruckverdichter (52) eine Vielzahl von Stufen beinhaltet, wobei jede Stufe eine Scheibe (94) mit einer Vielzahl von Schaufeln (96) umfasst, die sich von einem Rand der Scheibe radial nach außen erstreckt, und wobei die Vielzahl von Stufen mindestens eine erste Stufe, die eine erste Schaufel- und Scheibenkonfiguration aufweist, und eine zweite Stufe, die eine zweite Schaufel- und Scheibenkonfiguration aufweist, welche sich von der ersten Schaufel- und Scheibenkonfiguration unterscheidet, beinhaltet.

6. Gasturbinentriebwerk nach Anspruch 5, wobei die erste Schaufel- und Scheibenkonfiguration eine Vielzahl von Schlitzen zum Aufnehmen der Vielzahl von Schaufeln umfasst und eine Vielzahl von Randhohlräumen (98) für Wabendichtungen beinhaltet und wobei die zweite Schaufel- und Scheibenkonfiguration einstückig ausgebildete Schaufeln umfasst, sodass keine Randhohlräume oder zugehörigen Wabendichtungen vorhanden sind.

7. Gasturbinentriebwerk nach Anspruch 6, wobei die erste Stufe vor der zweiten Stufe angeordnet ist.

8. Gasturbinentriebwerk nach einem der vorhergehenden Ansprüche, wobei:

sich der erste Verdichterabschnitt (24) mit einer ersten Drehzahl dreht und sich der zweite Verdichterabschnitt (52) mit einer zweiten Drehzahl dreht, die größer als die erste Drehzahl ist.

9. Gasturbinentriebwerk nach Anspruch 8, wobei der zweite Verdichterabschnitt (52) eine Vielzahl von Stufen beinhaltet, wobei jede Stufe eine Scheibe (94) mit einer Vielzahl von Schaufeln (96) umfasst, die sich von einem Rand der Scheibe radial nach außen erstreckt, und wobei die Vielzahl von Stufen mindestens eine erste Stufe, die eine erste Schaufel- und Scheibenkonfiguration aufweist, und eine zweite Stufe, die eine zweite Schaufel- und Scheibenkonfiguration aufweist, welche sich von der ersten Schaufel- und Scheibenkonfiguration unterscheidet, beinhaltet und wobei die erste Schaufel- und Scheibenkonfiguration eine Vielzahl von Schlitzen zum Aufnehmen der Vielzahl von Schaufeln umfasst und eine Vielzahl von Randhohlräumen (98) für Wabendichtungen beinhaltet und wobei die zweite Schaufel- und Scheibenkonfiguration einstückig ausgebildete Schaufeln umfasst, sodass keine Randhohlräume oder zugehörige Wabendichtungen vorhanden sind, und wobei die erste Stufe vor der zweiten Stufe positioniert ist.

10. Gasturbinentriebwerk nach einem der vorhergehenden Ansprüche, wobei die Betriebstemperatur auf Meereshöhe, über die Leistung am Ende des Starts und bei einem Nennschub für das Gasturbinentriebwerk definiert ist.

11. Gasturbinentriebwerk nach einem der vorhergehenden Ansprüche, wobei die Getriebearchitektur (48) zwischen dem Fan (42) und einem durch die Niederdruckturbine (46) angetriebenen Verdichterrotor positioniert ist.

12. Gasturbinentriebwerk nach einem der vorhergehenden Ansprüche, wobei das Gasturbinentriebwerk mit einem Umgehungsverhältnis von über 10 und einem Übersetzungsverhältnis zwischen dem Fan (42) und der Niederdruckturbine (46) von 3,0625 konfiguriert ist, wobei der Fan (42) dazu konfiguriert ist, bei der durchschnittlichen Ausgangstemperatur mit einer Höchstdrehzahl von 3280 U/min betrieben zu werden, wobei bei der durchschnittlichen Ausgangstemperatur der erste Verdichterabschnitt (44) dazu konfiguriert ist, sich mit einer Höchstdrehzahl von 10.047 U/min zu drehen, und der zweite Verdichterabschnitt (52) dazu konfiguriert ist, sich mit einer Höchstdrehzahl von 22.514 U/min zu drehen.

## Revendications

1. Moteur à turbine à gaz (20) comprenant :

une soufflante (42) comportant une pluralité de pales de soufflante pouvant tourner autour d'un axe ;

une section de compresseur (24) comportant au moins une première section de compresseur (44) et une seconde section de compresseur (52), dans lequel la première section de compresseur comprend un compresseur basse pression (44) et la seconde section de compresseur comprend un compresseur haute pression (52) ;

une chambre de combustion (26) en communication fluidique avec la section de compresseur (24) ;

une section de turbine (28) en communication fluidique avec la chambre de combustion (26), dans lequel la section de turbine (28) comprend une turbine basse pression (46) qui entraîne le compresseur basse pression (44) via un premier arbre (30) et une turbine haute pression (54) qui entraîne le compresseur haute pression (52) via un second arbre (32) ; et

une architecture à engrenages (48) entraînée par la section de turbine (28) pour faire tourner la soufflante (42) autour de l'axe, dans lequel l'architecture à engrenages (48) couple le premier arbre (30) à la soufflante (42),

**caractérisé en ce que** :

le moteur à turbine à gaz (20) comprend également un inducteur (70) formant une section de compression supplémentaire positionnée devant les compresseurs haute et basse pression (52, 44) ; et

le moteur à turbine à gaz est configuré pour fonctionner à une température de sortie moyenne de la section de compresseur comprise entre environ 810,9 K (1 000 °F) et environ 1 088 K (1 500 °F),

dans lequel l'inducteur (70) est configuré pour tourner à une vitesse supérieure à celle de la soufflante (42) grâce à une sortie supplémentaire de l'architecture à engrenages (48).

2. Moteur à turbine à gaz selon la revendication 1, dans lequel la température de sortie moyenne est comprise entre environ 866,5 K (1 100 °F) et environ 1 061 K (1 450 °F).

3. Moteur à turbine à gaz selon la revendication 1 ou 2, dans lequel la soufflante (42) entraîne l'air le long d'un trajet d'écoulement de dérivation (C) dans un conduit de dérivation défini entre une nacelle de soufflante (15) et une nacelle centrale (16), et dans lequel un rapport de dérivation est supérieur à environ dix.

4. Moteur à turbine à gaz selon une quelconque revendication précédente, dans lequel l'architecture à engrenages (48) a un rapport de démultiplication qui est supérieur à environ 2,4.

5. Moteur à turbine à gaz selon une quelconque revendication précédente, dans lequel le compresseur haute pression (52) comporte une pluralité d'étages, chaque étage comprenant un disque (94) avec une pluralité de pales (96) se prolongeant radialement vers l'extérieur à partir d'un bord du disque, et dans lequel la pluralité d'étages comporte au moins un premier étage ayant une première configuration de pales et de disques et un second étage ayant une seconde configuration de pales et de disques qui est différente de la première configuration de pales et de disques.

6. Moteur à turbine à gaz selon la revendication 5, dans lequel la première configuration de pales et de disques comprend une pluralité de fentes pour recevoir la pluralité de pales et comportant une pluralité de cavités de bord (98) pour des joints en nid d'abeilles, et dans lequel la seconde configuration de pales et de disques comprend des pales formées d'un seul tenant de sorte qu'il n'y a pas de cavités de bord ni de joints en nid d'abeilles associés.

7. Moteur à turbine à gaz selon la revendication 6, dans lequel le premier étage est positionné en avant du second étage.

8. Moteur à turbine à gaz selon une quelconque revendication précédente, dans lequel :
la première section de compresseur (24) tourne à une première vitesse et la seconde section de compresseur (52) tourne à une seconde vitesse supérieure à la première vitesse.

9. Moteur à turbine à gaz selon la revendication 8, dans lequel la seconde section de compresseur (52) comporte une pluralité d'étages, chaque étage comprenant un disque (94) avec une pluralité de pales (96) se prolongeant radialement vers l'extérieur à partir d'un bord du disque, et dans lequel la pluralité d'étages comporte au moins un premier étage ayant une première configuration de pales et de disques et un second étage ayant une seconde configuration de pales et de disques qui est différente de la première configuration de pales et de disques, et dans lequel la première configuration de pales et de disques comprend une pluralité de fentes pour recevoir la pluralité de pales et comportant une pluralité de cavités de bord (98) pour des joints en nid d'abeilles, et dans lequel la seconde configuration de pales et de disques comprend des pales formées d'un seul tenant de sorte qu'il n'y a pas de cavités de bord ni de joints en nid d'abeilles associés, et dans lequel le premier étage est positionné en avant du second étage.

10. Moteur à turbine à gaz selon une quelconque revendication précédente, dans lequel la température de fonctionnement est définie au niveau de la mer, à la puissance de fin de décollage et à une poussée nominale pour le moteur à turbine à gaz.

11. Moteur à turbine à gaz selon une quelconque revendication précédente, dans lequel l'architecture à engrenages (48) est positionnée entre la soufflante (42) et un rotor de compresseur entraîné par la turbine basse pression (46).

12. Moteur à turbine à gaz selon une quelconque revendication précédente, dans lequel le moteur à turbine à gaz est configuré avec un rapport de dérivation supérieur à 10 et un rapport de démultiplication entre la soufflante (42) et la turbine basse pression (46) de 3,0625, la soufflante (42) étant configurée pour fonctionner à une vitesse de ligne rouge de 3 280 tr/min à la température de sortie moyenne, dans lequel la première section de compresseur (44) est configurée pour tourner à une vitesse de ligne rouge de 10 047 tr/min et la seconde section de compresseur (52) est configurée pour tourner à une vitesse de ligne rouge de 22 514 tr/min à la température de sortie moyenne.

**FIG.1**

EP 2 904 254 B2

FIG.2

GTF With High Compressor Exit Temperatures

| Redline Speed | Engine #1 | Engine #2 | Engine #3 |
|---|---|---|---|
| Fan (rpm) | 3280 | 5263 | 3460 |
| LPC (rpm) | 10047 | 12680 | 10600 |
| HPC (rpm) | 22514 | 25160 | 24470 |
| Gear Ratio | 3.0625:1 | 2.409:1 | 3.0625:1 |

<u>FIG.3</u>

EP 2 904 254 B2

FIG.4

FIG.5

42

70

72

48

**FIG.6**

**EP 2 904 254 B2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009053058 A1